# EUROPEAN PATENT SPECIFICATION

(11) **EP 4 184 293 B1**
(45) Date of publication and mention of the grant of the patent: **15.10.2025**
(21) Application number: 21213032.2
(22) Date of filing: 08.12.2021
(51) Int. Cl.: G06F 3/0354, G06F 3/039

(54) **GLIDE FOR A MOUSE, MANUFACTURING METHOD THEREOF, AND MOUSE HAVING SAME**
GLEITER FÜR EINE MAUS, FERTIGUNGSVERFAHREN UND MAUS MIT DIESEM GLEITER
PATIN POUR UNE SOURIS, SON PROCÉDÉ DE FABRICATION ET SOURIS COMPORTANT CE PATIN

(30) Priority: 18.11.2021 KR 20210159329; 07.12.2021 KR 20210173553
(43) Date of publication of application: 24.05.2023
(73) Proprietor: Aplusx Inc., Gyeonggi-do 13486 (KR)
(72) Inventor: SHIM, Kun Hee, 06616 Seoul (KR)
(74) Representative: Kurig, Thomas

(56) References cited:
- CN-A- 109 649 063
- CN-A- 110 903 038
- US-A1- 2007 069 088
- US-A1- 2015 329 413
- ANONYMOUS L.: "Aluminosilicate", 2 March 2021 (2021-03-02), Wikipedia, XP093046342, Retrieved from the Internet <URL:https://en.wikipedia.org/w/index.php?title=Aluminosilicate&oldid=1009726254> [retrieved on 20230511]
- ANONYMOUS: "Tempered glass - Wikipedia", 19 September 2021 (2021-09-19), XP093000820, Retrieved from the Internet <URL:https://en.wikipedia.org/w/index.php?title=Tempered_glass&oldid=1045180000> [retrieved on 20221122]
- ANONYMOUS: "Technological process of screen printing glass", 21 July 2020 (2020-07-21), XP093046339, Retrieved from the Internet <URL:https://www.chinaboltingcloth.com/news/technological-process-of-screen-printing-glass.html> [retrieved on 20230511]
- ANONYMOUS: "Fingerprint proof oil", 6 August 2016 (2016-08-06), XP093046340, Retrieved from the Internet <URL:http://www.sicongchem.com/m_en/blogDetails.php?id=174> [retrieved on 20230511]
- ANONYMOUS: "Pulsar XLITE Superglide Limited Edition Gaming Mouse", 19 October 2021 (2021-10-19), XP093170859, Retrieved from the Internet <URL:https://www.lazada.com.ph/products/pulsar-xlite-superglide-limited-edition-gaming-mouse-i2398306778.html> [retrieved on 20240605]
- ANONYMOUS: "Introducing Xlite Superglide - Pulsar Gaming Gears", 8 July 2021 (2021-07-08), XP093067393, Retrieved from the Internet <URL:https://www.pulsar.gg/blogs/news/introducing-xlite-superglide> [retrieved on 20230725]
- ANONYMOUS: "Pulsar Gaming Gears - Superglide Mouse Feet", 10 November 2021 (2021-11-10), XP093170922, Retrieved from the Internet <URL:https://x.com/PulsarGears/status/1458496843319447558> [retrieved on 20240605]

## Description

### [Technical Field]

The present disclosure relates to a glide for a mouse, a manufacturing method thereof, and a mouse having the same.

### [Background Art]

A mouse is one input device of a computer, and a user holds the mouse with the hand to use. When the user moves the mouse, a cursor on a display screen of the computer. When the user clicks a button of the mouse, commands are executed.

However, while the mouse moves, the bottom surface of the mouse may be worn away due to friction generated between the bottom surface of the mouse and a support, for instance, a mouse pad or a desk, and so, performance of the mouse may be deteriorated.

### [Patent Literature]

### [Patent Documents]

Patent document US 2020/039384 A1 discloses a vehicle with multiple seats arranged in a fore and aft direction in a cabin of the vehicle. Each of the multiple seats are disposed to face obliquely forward such that the seats are parallel to one another, and a partition wall is provided between each adjoining pair of seats.

Patent literature US 2007/069088 A1 relates to a system and method for controlling friction between a mouse and the surface upon which it is placed, including: making the feet of the mouse from various different materials, creating layers of air between the mouse and the surface, creating beveled edges for the feet of mouse, the feet of the mouse are made of a piezo-electric layer bonded to another layer made of a different material. Exciting the piezo-electric layer at certain frequencies makes the two layers shrink and expand differently, thus creating oscillations of the feet. Portions of the mouse feet are made of different materials with different coefficients of friction.

Patent literature CN 109649063 A relates to a manufacturing method of a protective cover plate including the following steps: glass glaze colorful ink is printed on a cover plate substrate according to a preset pattern; the surface of the printed cover plate substrate is treated; the cover plate substrate is preheated after surface treatment, and the glass glaze colorful ink on the cover plate substrate is sintered by adopting laser; and an anti-fingerprint layer is manufactured on the cover plate after sintering of the glass glaze colorful ink.

Patent literature CN 110903038 A relates to preparation processes for tempered films and a preparation method thereof, including the following steps: rough shape cutting; CNC fine carving; thorough sweeping; ultrasonic cleaning; tempering; coating of anti-fingerprint oil; drying; and bonding via AB glue.

The article entitled "Pulsar XLITE Superglide Limited Edition Gaming Mouse", retrievable from Internet under https://www.lazada.com.ph/products/ pulsar-xlite-superglide-limited-edition-gaming-mouse-i2398306778.html, discloses a so-called "superglide" computer mouse with alumino-silicate tempered glass feet. The glass feet have a perfectly smooth and flat surface and polished edges.

Patent literature US 2015/329413 A1 discloses a glass-ceramic article with an anti-fingerprint coating applicable, e.g., to computer accessories, such as mice.

### [Disclosure]

### [Technical Problem]

The present disclosure has been made to solve the above-mentioned problems occurring in the prior art, and it is an object to provide a glide for a mouse, which is made of a glass material and is disposed on an area of the bottom surface of the mouse in order to reduce friction between the bottom surface of the mouse and a support and to optimize performance of the mouse when the mouse moves, a manufacturing method thereof, and a mouse having the same.

The objects of the present disclosure are not limited to those mentioned above, and other objects not mentioned herein will be clearly understood by those skilled in the art from the following description.

### [Technical Solution]

The invention is set out in the appended set of claims. To accomplish the above objects, in a first aspect of the present invention, there is provided a manufacturing method of a glide for a mouse as set out in appended claim 1.

In another aspect of the present invention, there is provided a glide for a mouse as set out in appended claim 4.

In another aspect of the present invention, there is provided a mouse as set out in appended claim 5.

Further advantageous embodiments are set out in the dependent claims.

Specific matters of other embodiments are included in the detailed description and drawings of the present disclosure.

### [Advantageous Effects]

The glide for a mouse, the manufacturing method thereof, and the mouse having the same according to the present invention can reduce friction between the bottom surface of the mouse and a support, and optimize performance of the mouse when the mouse moves, since the glide for the mouse is made of a glass material and is disposed on an area of the bottom surface of the mouse.

The objects of the present disclosure are not limited to those mentioned above, and other objects not mentioned herein will be clearly understood by those skilled in the art from the following description.

### [Description of Drawings]

FIG. 1 is a flow chart illustrating a manufacturing method of a glide for a mouse according to an embodiment of the present disclosure.
FIG. 2 is a perspective view illustrating a mouse and a glide for a mouse according to an embodiment of the present disclosure.
FIG. 3 is an exploded perspective view illustrating the mouse and the glide for a mouse according to the embodiment of the present disclosure.

### [Mode for Invention]

Advantages and features of the present disclosure and methods accomplishing the advantages and features will become apparent from the following detailed description of exemplary embodiments with reference to the accompanying drawings. However, the present invention is not limited to exemplary embodiment disclosed herein but will be implemented in various forms. The exemplary embodiments are provided so that the present invention is completely disclosed, and a person of ordinary skilled in the art can fully understand the scope of the present invention. Therefore, the present invention will be defined only by the scope of the appended claims.

Unless otherwise defined, all terms (including technical and scientific terms) used herein have the same meaning as commonly understood by those skilled in the technical field to which the present disclosure pertains. It will be further understood that terms, such as those defined in commonly used dictionaries, should not be interpreted in an idealized or overly formal sense unless expressly so defined herein.

Hereinafter, preferred embodiments of the present disclosure will be described in detail with reference to the accompanying drawings.

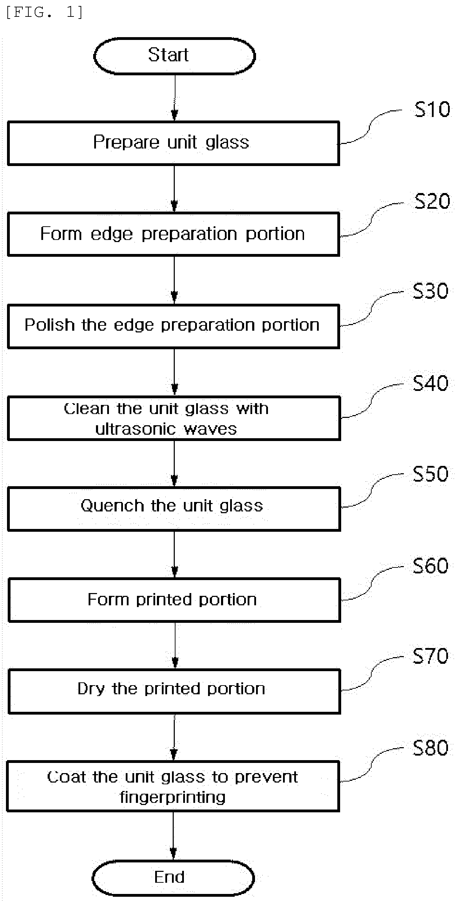

FIG. 1 is a flow chart illustrating a manufacturing method of a glide for a mouse according to an embodiment of the present disclosure.

Referring to FIG. 1, the manufacturing method of a glide for a mouse according to an embodiment of the present disclosure includes the steps of: (S10) preparing unit glass; (S20) forming an edge preparation portion; (S30) polishing the edge preparation portion; (S40) cleaning the unit glass with ultrasonic waves; (S50) quenching the unit glass; (S60) forming a printed portion; (S70) drying the printed portion; and (S80) coating the unit glass to prevent fingerprinting.

First, in the step (S10) of preparing unit glass, mother glass is cut into a specific shape to prepare unit glass. Here, cutting the mother glass means that the mother glass is cut into a shape corresponding to a glide for a mouse, which is a finished product. Furthermore, the glide for the mouse, which is the finished product is not specifically limited in its shape, but may be in a disc shape or in an arc shape.

In an embodiment, the step (S10) of preparing unit glass is performed by laser beam machining. Here, laser beam machining means that the mother glass is cut into a specific shape to prepare unit glass. The prepared unit glass does not transform and contaminate the cut surface, and can improve machining accuracy of the cut surface.

In an embodiment, the mother glass is made of an aluminosilicate glass material. Here, the aluminosilicate glass includes alkali metal oxide, aluminum oxide, and silicon dioxide, and is prevented from breakage by external shock.

Next, in the step (S20) of forming an edge preparation portion, an edge preparation portion which has a predetermined curvature radius and is chamfered along the circumference of the unit glass is formed. Here, the edge preparation portion may be chamfered along the circumference of the tempered glass portion.

In an embodiment, the step (S20) of forming an edge preparation portion is performed by computerized numerical control (CNC) machining. Here, the CNC machining means to form an edge preparation portion by rounding the circumference of the unit glass using a machine tool. Alternatively, the CNC machining may mean to form an edge preparation portion by chamfering along the circumference of the unit glass using a machine tool.

Next, in the step (S30) of polishing the edge preparation portion, the edge preparation portion of the unit glass is polished. In this instance, burrs remaining on the edge preparation portion can be removed. Meanwhile, in the polishing step, not only the edge preparation portion of the unit glass but also the entirety of the unit glass can be polished.

After that, in the step (S40) of cleaning the unit glass with ultrasonic waves, the polished unit glass is washed with ultrasonic waves.

Next, in the step (S50) of quenching the unit glass, the polished unit glass is quenched. Here, Quenching is performed in such a way that the unit glass is heated at 600°C to 700°C and is quickly cooled by a spray of cooling fluid. As described above, the unit glass quenched at 600°C to 700°C has the quality of tempered glass. That is, when the unit glass is quenched, the surface of the unit glass is thermally expanded due to intense heat, and it causes compression stress. The inside of the unit glass gets relatively smaller in thermal expansion than the surface of the unit glass. So, in order to adjust balance of power, tensile strength to expand outwards is generated. Therefore, the unit glass is not easily broken by external force due to the increase of intensity, and can reduce generation of scratches on the unit glass due to the increase of surface hardness.

Meanwhile, after quenching of the unit glass, if necessary, a fault inspection in connection with the tempered glass property of the unit glass may be carried out. In this instance, if the tempered glass property of the unit glass is bad, the unit glass may be scrapped.

Next, in the step (S60) of forming a printed portion, at least one among specific patterns, shapes and texts is printed on the quenched unit glass so as to form a printed portion. Here, the printed portion may be formed by glass ink printing. Moreover, glass ink is not limited specifically, but may include glass powder, inorganic color pigments, and oil.

After that, in the step (S70) of drying the printed portion, the printed portion printed on the unit glass is dried. Here, drying the printed portion is not limited specifically, but the printed portion can be dried by being left unattended or by ultraviolet rays irradiated to the printed portion. On the other hand, after the printed portion is dried, if necessary, a fault inspection in connection with shape-matching of the printed portion is carried out. In this instance, if the shape of the printed portion formed on the unit glass is different from a predetermined shape, the unit glass may be scrapped.

Next, in the step (S80) of coating the unit glass to prevent fingerprinting, the unit glass is coated with anti-fingerprint coating agents. Then, manufacturing of a glide for a mouse is finished. In an embodiment, the anti-fingerprint coating agents are not specifically limited, but may be fluorine-based or silicone-based anti-fingerprint coating agents.

After that, double-sided adhesive tape may be adhered on one side of the glide for the mouse or adhesives may be applied to one side of the glide, and then, the glide for the mouse can be mounted on an area of the bottom surface of the mouse.

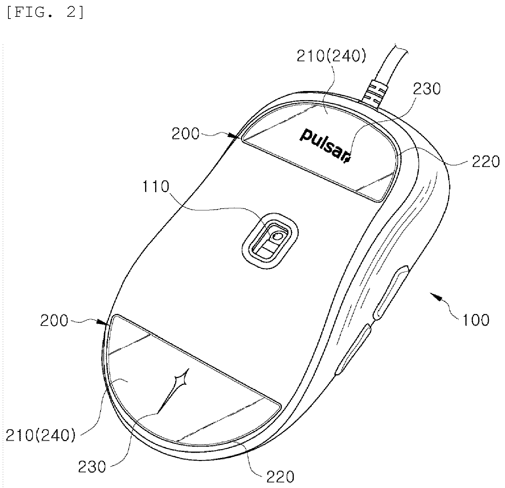

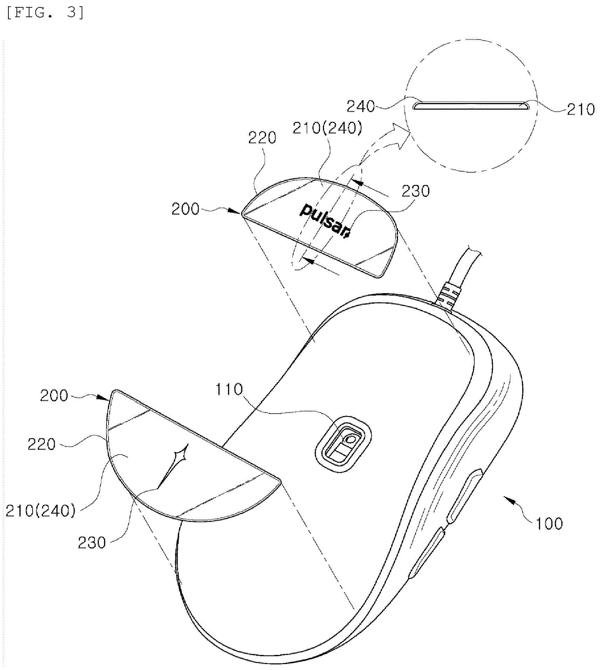

FIG. 2 is a perspective view illustrating a mouse and a glide for a mouse according to an embodiment of the present disclosure, and FIG. 3 is an exploded perspective view illustrating the mouse and the glide for a mouse according to the embodiment of the present disclosure.

As illustrated in FIGS. 2 and 3, the glide 200 for the mouse according to the embodiment of the present disclosure includes a tempered glass portion 210, an edge preparation portion 220, a printed portion 230, and a coated portion 240.

The tempered glass portion 210 is cut into a specific shape. The tempered glass portion 210 may be tempered glass formed in a way that the mother glass is cut into a unit glass of a specific shape and the unit glass is quenched. Here, cutting of the mother glass may be performed by laser machining.

The edge preparation portion 220 has a predetermined radius of curvature along the circumference of the tempered glass portion 210, and rounding is applied to the edge preparation portion to be curved. The edge preparation portion 220 may be chamfered. Here, the rounding or the chamfering of the tempered glass portion 210 may be performed by CNC machining of the unit glass before the unit glass is quenched to be tempered.

The printed portion 230 has any one among specific shapes, patterns and texts printed on the tempered glass portion 210. The printed portion 230 may be formed by glass ink printing. Additionally, the glass ink is not limited specifically, but may be glass powder, inorganic color pigments, and oil.

The anti-fingerprint coated portion 240 is formed in a way that the tempered glass portion 210 is coated with anti-fingerprint coating agents. In an embodiment, the anti-fingerprint coating agents are not limited specifically, but may be fluorine-based or silicone-based anti-fingerprint coating agents.

Referring to FIGS. 2 and 3, the mouse according to the embodiment of the present invention includes a graspable mouse body 100, and a glide 200 mounted on an area of the bottom surface of the mouse body 100.

The glide 200 for the mouse includes the tempered glass portion 210 cut into a specific shape; the edge preparation portion 220 having a predetermined radius of curvature along the circumference of the tempered glass portion 210 and being rounded; the printed portion 230 having any one among specific shapes, patterns or texts printed on the tempered glass portion 210; and the anti-fingerprint coated portion 240 coated with anti-fingerprint coating agents. The glide 200 for the mouse can be manufactured by the above-mentioned manufacturing method. Here, the edge preparation portion 220 may be chamfered.

Meanwhile, in the drawings, a pair of the glides 200 are arranged on the bottom surface of the mouse body 100 to face each other across a sensor unit 110, but are not limited to the above. One or more glides for a mouse may be located at various locations of the bottom surface of the mouse body 100.

The glide for a mouse, the manufacturing method thereof, and the mouse having the same according to the present disclosure can reduce friction between the bottom surface of the mouse and a support, and optimize performance of the mouse when the mouse moves, since the glide 200 for the mouse is made of a glass material and is disposed on an area of the bottom surface of the mouse.

The above description is only exemplary, and it will be understood by those skilled in the art that the invention may be embodied in other concrete forms without changing the technological scope and essential features. Therefore, the above-described embodiments should be considered only as examples in all aspects and not for purposes of limitation.

### [EXPLANATION OF REFERENCE NUMERALS]

100: MOUSE BODY
110: SENSOR UNIT
200: GLIDE FOR MOUSE
210: TEMPERED GLASS PORTION
220: EDGE PREPARATION PORTION
230: PRINTED PORTION
240: COATED PORTION

## Claims

1. A manufacturing method of a glide (200) for a mouse, wherein the glide (200) is a finished product and mountable on an area of a bottom surface of the mouse via a double-sided adhesive tape or adhesives, the method comprising:
preparing (S10) unit glass by cutting mother glass into a specific shape, wherein the mother glass is made of an aluminosilicate glass material;
forming (S20) an edge preparation portion chamfered or rounded with a predetermined radius of curvature along the circumference of the unit glass;
polishing (S30) the edge preparation portion of the unit glass to obtain a polished unit glass;
quenching (S50) the polished unit glass to obtain a tempered glass portion (210), wherein in the step of quenching, the polished unit glass is heated at 600°C to 700°C and is quickly cooled by a spray of cooling fluid;
printing (S60) at least one among specific shapes, patterns or texts printed on the tempered glass portion to form a printed portion (230);
drying (S70) the printed portion printed on the tempered glass portion;
coating (S80) the tempered glass portion with anti-fingerprint coating agents to form an anti-fingerprint coated portion (240) on the tempered glass portion,
wherein the anti-fingerprint coating agents are fluorine-based anti-fingerprint coating agents or silicone-based anti-fingerprint coating agents, and
wherein the printed portion is formed by glass ink printing, a glass ink used in the glass ink printing includes glass powder, inorganic color pigments and oil.

2. The method of claim 1, wherein preparing the unit glass is performed by laser machining, and
wherein forming the edge preparation portion is performed by CNC machining.

3. The method of claim 1, further comprising: after polishing,
cleaning the polished unit glass with ultrasonic waves.

4. A glide (200) for a mouse, wherein the glide (200) is a finished product and mountable on an area of a bottom surface of the mouse via a double-sided adhesive tape or adhesives, the glide (200) comprising:
a tempered glass portion (210) cut into a specific shape;
an edge preparation portion (220) chamfered or rounded with a predetermined radius of curvature along the circumference of the tempered glass portion;
a printed portion (230) having any one among specific shapes, patterns or texts printed on the tempered glass portion; and
an anti-fingerprint coated portion (240) coated on the tempered glass portion with anti-fingerprint coating agents;
wherein a mother glass of the tempered glass portion is made of an aluminosilicate glass material,
wherein the anti-fingerprint coating agents are fluorine-based anti-fingerprint coating agents or silicone-based anti-fingerprint coating agents, and
wherein the printed portion (230) is formed by glass ink printing, and a glass ink used in the glass ink printing includes glass powder, inorganic color pigments and oil.

5. A mouse comprising:
a graspable mouse body (100); and
a glide (200) according to claim 4;
wherein the glide is mounted on an area of a bottom surface of the graspable mouse body.

## Patentansprüche

1. Verfahren zur Herstellung eines Gleitstücks (200) für eine Maus, wobei das Gleitstück (200) ein Fertigprodukt ist und über ein doppelseitiges Klebeband oder Klebstoffe an einem Bereich einer Unterseite der Maus befestigt werden kann, wobei das Verfahren umfasst:
Vorbereiten (S10) von Einheitsglas durch Schneiden von Mutterglas in eine bestimmte Form, wobei das Mutterglas aus einem Aluminiumsilikat-Glasmaterial hergestellt ist;
Bilden (S20) eines Randvorbereitungsabschnitts, der entlang des Umfangs des Einheitsglases mit einem vorbestimmten Krümmungsradius abgeschrägt oder abgerundet ist;
Polieren (S30) des Randvorbereitungsabschnitts des Einheitsglases, um ein poliertes Einheitsglas zu erhalten;
Abschrecken (S50) des polierten Einheitsglases, um einen gehärteten Glasabschnitt (210) zu erhalten, wobei in dem Schritt des Abschreckens das polierte Einheitsglas auf 600 °C bis 700 °C erhitzt und durch ein Sprühen von Kühlfluid schnell abgekühlt wird;
Drucken (S60) mindestens eines von bestimmten Formen, Mustern oder Texten, gedruckt auf den gehärteten Glasabschnitt, um einen bedruckten Abschnitt (230) zu bilden;
Trocknen (S70) des auf den gehärteten Glasabschnitt gedruckten bedruckten Abschnitts;
Beschichten (S80) des gehärteten Glasabschnitts mit Antifingerabdruck-Beschichtungsmitteln, um einen mit Antifingerabdruck beschichteten Abschnitt (240) auf dem gehärteten Glasabschnitt zu bilden;
wobei die Antifingerabdruck-Beschichtungsmittel fluorbasierte Antifingerabdruck-Beschichtungsmittel oder silikonbasierte Antifingerabdruck-Beschichtungsmittel sind, und
wobei der bedruckte Abschnitt durch Glasfarbendruck gebildet ist, wobei eine bei dem Glasfarbendruck verwendete Glasfarbe Glaspulver, anorganische Farbpigmente und Öl umfasst.

2. Verfahren nach Anspruch 1, wobei Vorbereiten des Einheitsglases durch Laserbearbeitung erfolgt und
wobei Bilden des Randvorbereitungsabschnitts durch CNC-Bearbeitung erfolgt.

3. Verfahren nach Anspruch 1, ferner umfassend: nach dem Polieren
Reinigen des polierten Einheitsglases mit Ultraschallwellen.

4. Gleitstück (200) für eine Maus, wobei das Gleitstück (200) ein Fertigprodukt ist und über ein doppelseitiges Klebeband oder Klebstoffe an einem Bereich einer Unterseite der Maus anbringbar ist, wobei das Gleitstück (200) umfasst:
einen in eine bestimmte Form geschnittenen gehärteten Glasabschnitt (210);
einen Randvorbereitungsabschnitt (220), der entlang des Umfangs des gehärteten Glasabschnitts mit einem vorbestimmten Krümmungsradius abgeschrägt oder abgerundet ist;
einen bedruckten Abschnitt (230), der eines von bestimmten Formen, Mustern oder Texten aufweist, gedruckt auf dem gehärteten Glasabschnitt; und
einen Antifingerabdruck beschichteten Abschnitt (240), der auf dem gehärteten Glasabschnitt mit Antifingerabdruck-Beschichtungsmitteln beschichtet ist;
wobei ein Mutterglas des gehärteten Glasabschnitts aus einem Aluminiumsilikat-Glasmaterial hergestellt ist,
wobei die Antifingerabdruck-Beschichtungsmittel fluorbasierte Antifingerabdruck-Beschichtungsmittel oder silikonbasierte Antifingerabdruck-Beschichtungsmittel sind, und
wobei der bedruckte Abschnitt (230) durch Glasfarbendruck gebildet ist und eine bei dem Glasfarbendruck verwendete Glasfarbe Glaspulver, anorganische Farbpigmente und Öl umfasst.

5. Maus, umfassend:
einen greifbaren Mauskörper (100); und
ein Gleitstück (200) nach Anspruch 4;
wobei das Gleitstück an einem Bereich einer Unterseite des greifbaren Mauskörpers angebracht ist.

## Revendications

1. Un procédé de fabrication d'un patin (200) pour souris, le patin (200) étant un produit fini et étant apte à être monté sur une zone de la surface inférieure de la souris au moyen d'un ruban adhésif double face ou d'adhésifs, le procédé comprenant :
le fait (S10) de préparer un verre unitaire en découpant un verre de base selon une forme spécifique, le verre de base étant constitué d'un matériau en verre aluminosilicate ;
le fait (S20) de former une partie à préparation de bord chanfreinée ou arrondie selon un rayon de courbure prédéterminé le long de la circonférence du verre unitaire ;
le fait (S30) de polir la partie de préparation de bord du verre unitaire pour obtenir un verre unitaire poli ;
le fait (S50) de tremper le verre unitaire poli pour obtenir une partie en verre trempé (210) ; dans l'étape de trempe, le verre unitaire poli est chauffé entre 600°C et 700°C et est rapidement refroidi par une pulvérisation de fluide de refroidissement ;
le fait (S60) d'imprimer au moins un parmi une forme, un motif ou un texte spécifique sur la partie en verre trempé afin de former une partie imprimée (230) ;
le fait (S70) de sécher la partie imprimée sur la partie en verre trempé ;
le fait (S80) de revêtir la partie en verre trempé d'agents anti-traces de doigts pour former une partie (240) revêtue d'une couche anti-traces de doigts sur la partie en verre trempé,
les agents de revêtement anti-traces de doigts étant des agents de revêtement anti-traces de doigts à base de fluor ou des agents de revêtement anti-traces de doigts à base de silicone, et
la partie imprimée étant formée par impression à l'encre pour verre, une encre pour verre utilisée dans l'impression à l'encre pour verre comprenant de la poudre de verre, des pigments colorés inorganiques et de l'huile.

2. Le procédé selon la revendication 1, dans lequel la préparation du verre unitaire est mise en œuvre par usinage au laser, et
dans lequel la formation de la partie de préparation des bords est mise en œuvre par usinage CNC.

3. Le procédé selon la revendication 1, comprenant en outre : après le polissage,
le fait de nettoyer le verre unitaire poli avec des ondes ultrasonores.

4. Un patin (200) pour une souris, le patin (200) étant un produit fini et étant apte à être monté sur une zone de la surface inférieure de la souris au moyen d'un ruban adhésif double face ou d'adhésifs, le patin (200) comprenant :
une partie en verre trempé (210) découpée selon une forme spécifique ;
une partie à préparation de bord (220), chanfreinée ou arrondie selon un rayon de courbure prédéterminé le long de la circonférence de la partie en verre trempé ;
une partie imprimée (230) comportant l'un quelconque parmi des formes, des motifs ou des textes spécifiques imprimés sur la partie en verre trempé ; et
une partie revêtue d'un revêtement anti-traces de doigts (240) appliquée sur la partie en verre trempé avec des agents de revêtement anti-traces de doigts,
un verre de base de la partie en verre trempé étant constitué d'un matériau en verre aluminosilicate,
les agents de revêtement anti-traces de doigts étant des agents de revêtement anti-traces de doigts à base de fluor ou des agents de revêtement anti-traces de doigts à base de silicone, et
la partie imprimée (230) étant formée par impression à l'encre pour verre et une encre pour verre utilisée dans l'impression à l'encre pour verre comprenant de la poudre de verre, des pigments colorés inorganiques et de l'huile.

5. Une souris comprenant :
un corps de souris (100) apte à être saisi ; et
un patin (200) selon la revendication 4 ;
le patin étant monté sur une zone d'une surface inférieure du corps de souris apte à être saisi.
